# EUROPÄISCHE PATENTANMELDUNG

(11) **EP 2 738 511 A1**
(43) Veröffentlichungstag der Anmeldung: **04.06.2014**
(21) Anmeldenummer: 13193600.7
(22) Anmeldetag: 20.11.2013
(51) Int. Cl.: F41G 1/16, G02B 23/16, F41G 11/00, F16M 13/00

(54) **Zubehöradapter für eine vereinfachte Zielfindung**

(30) Priorität: 03.12.2012 DE 102012111730; 03.12.2012 US 201261732435 P
(71) Anmelder: Carl Zeiss Sports Optics GmbH, 35576 Wetzlar (DE)
(72) Erfinder: Schmitt, Christoph, 35444 Biebertal (DE); Dobler, Gerold, 73087 Bad Doll (DE)
(74) Vertreter: Blumbach Zinngrebe

(57) **Zusammenfassung**

Die vorliegende Erfindung betrifft einen Zubehöradapter 10 für eine vereinfachte Zielfindung, welcher mit einem vergrößernden abbildenden optischen Gerät, z.B. einem Spektiv 41, verwendet werden kann. Der Zubehöradapter umfasst kreisringförmiges Befestigungselement 11, eine profilierte Schiene 13 mit einer Nut 14 zum Anvisieren eines Objekts, sowie einen Stab zur Verbindung des Befestigungselements mit der profilierten Schiene. Der Zubehöradapter ermöglicht es zudem, das optische Gerät mit weiteren, hochpräzisen Visierhilfen wie Laser oder Reflexvisier für eine vereinfachte Zielfindung auszustatten, indem diese an der profilierten Schiene 14 montiert werden..

## Beschreibung

Die vorliegende Erfindung betrifft einen Zubehöradapter für eine vereinfachte Zielfindung, welcher an oder mit einem abbildenden optischen Gerät, insbesondere einem vergrößernd abbildenden optischen Gerät, verwendet werden kann. Der Zubehöradapter ermöglicht es zudem, das optische Gerät mit weiteren, hochpräzisen Visierhilfen für eine vereinfachte Zielfindung auszustatten.

Abbildende Optische Geräte, insbesondere vergrößernd abbildende optische Geräte wie etwa ein Spektiv, ein Teleskop oder ein Teleobjektiv, können häufig mit einem Stativ verbunden werden. Dies hat den Vorteil, dass ein Benutzer, etwa bei der längeren Beobachtung eines Objektes im Gelände, das Gewicht des optischen Gerätes nicht über diesen längeren Zeitraum halten muss. Zudem bietet die Halterung eines abbildenden optischen Gerätes mittels eines Stativs häufig den Vorteil, dass eine bestimmte Orientierung und Position des optischen Gerätes festgelegt werden kann und somit eine längere Beobachtung eines bestimmten Bereiches oder Objektes deutlich vereinfacht werden kann.

Zur Halterung sind verschiedene Befestigungsvorrichtungen entwickelt worden. So ist beispielsweise in der DE 20 2008 010 323 U1 eine Befestigungsvorrichtung für ein optisches Gerät beschrieben. Mittels der Befestigungsvorrichtung kann ein Teleskop mit einem Basisgegenstand, insbesondere mit einem Stativkopf, verbunden werden. Die Befestigungsvorrichtung ermöglicht eine lineare Bewegung des optischen Gerätes innerhalb eines Verstellbereiches, wobei eine Bewegungsbegrenzung des Verstellbereiches festgelegt werden kann.

Auch die DE 21 2004 000 087 U1 offenbart eine Halterungs- und Einstellvorrichtung für ein optisches Beobachtungssystem, wobei das optische Gerät mit einem Stativ verbunden und schwenkbar gelagert werden kann.

Sobald weit entfernte Objekte mit Hilfe von stark vergrößernden abbildenden optischen Geräten gefunden werden sollen, so ist es häufig schwierig, das Objekt rasch zu finden. Dies kann etwa der Fall sein, wenn mit einem stark vergrößernden Teleobjektiv einer Kamera ein kleines Objekt in größerer Entfernung rasch gefunden werden soll. Ebenso schwierig kann es sein, bei Verwendung beispielsweise eines Spektivs ein Objekt, welches in Bewegung ist, rasch zu finden. Besonders schwierig kann das Auffinden des Objektes bzw. die Zielfindung sein, wenn keine zusätzliche Vorrichtung zum Anvisieren, beispielsweise ein Zusatz- oder Hilfsvisier, vorhanden ist.

Die Erfinder haben sich daher der Aufgabe angenommen, eine Möglichkeit zu schaffen, die Zielfindung für einen Benutzer bei Verwendung eines abbildenden optischen Gerätes, insbesondere eines vergrößernden abbildenden optischen Gerätes, zu verbessern und deutlich zu vereinfachen.

Dabei soll es ermöglicht werden, weitere Vorrichtungen, insbesondere zur Unterstützung der Zielfindung, einfach und sicher mit dem optischen Gerät lösbar zu verbinden.

Dabei sollen die Transportmöglichkeiten und die Robustheit des optischen Gerätes nicht wesentlich beeinträchtigt werden.

Überraschend einfach wird diese Aufgabe durch einen Zubehöradapter für eine vereinfachte Zielfindung zur Verwendung an oder mit einem abbildenden optischen Gerät nach einem der unabhängigen Ansprüche gelöst, welcher bereits ein einfaches Zusatzvisier umfasst und welcher dazu ausgebildet ist, ein Zusatzgerät, beispielsweise eine hochpräzise Visiereinrichtung, mit dem abbildenden optischen Gerät zu verbinden. Bevorzugte Ausführungsformen und Weiterbildungen der Erfindung sind den jeweiligen Unteransprüchen zu entnehmen.

Die Erfindung betrifft demnach einen Zubehöradapter für eine vereinfachte Zielfindung zur Verwendung an oder mit einem abbildenden optischen Gerät, insbesondere einem Spektiv, umfassend
- eine profilierte Schiene,
- einen Stab sowie
- ein kreisringförmiges Befestigungselement, um ein erstes Ende des Stabes mit dem optischen Gerät zu verbinden, wobei das dem ersten Ende gegenüberliegende Ende des Stabes mit der profilierten Schiene verbunden ist.

Die profilierte Schiene kann dabei bereits als einfaches Zusatzvisier oder zur Aufnahme eines Zusatzgerätes verwendet werden. Das Zusatzgerät kann dabei vorzugsweise präzise bzw. hochpräzise Geräte zur Zielfindung, also zum Visieren oder Anvisieren eines Objektes, umfassen. Bei einem abbildenden optischen Gerät mit vergrößernden bzw. stark vergrößernden Eigenschaften kann hierdurch das Auffinden eines Objektes, auch in einer größeren Entfernung zum optischen Gerät, deutlich vereinfacht werden, da ein Benutzer nicht durch das Objektiv des optischen Gerätes, sondern mittels des Zusatzvisiers oder des Zusatzgerätes das Objekt wesentlich einfacher suchen kann. Das optische Gerät kann dabei neben einem Spektiv auch andere abbildende optische Geräte, insbesondere vergrößernd abbildende optische Geräte, beispielsweise ein Teleskop oder ein Teleobjektiv umfassen.

Dabei ist die profilierte Schiene mittels eines Stabes mit einem kreisringförmigen Befestigungselement verbunden, welches mit dem optischen Gerät verbunden werden kann. Die profilierte Schiene kann dabei besonders günstig als gerades, längliches Profilelement ausgebildet und derart angeordnet sein, dass ihre Längsachse parallel zur optischen Achse des optischen Gerätes verläuft.

Dabei kann die profilierte Schiene auf der dem optischen Gerät abgewandten Seite eine zentrisch entlang der Längsachse verlaufende Nut umfassen. Besonders vorteilhaft ist diese Nut U- oder V-förmig ausgebildet. Derartige Schienen lassen sich kostengünstig mit hoher Präzision fertigen.

Auf diese Weise kann die Nut als Kimme für eine vereinfachte Zielfindung bei einer Verwendung an oder mit einem abbildenden optischen Gerät verwendet werden. Demnach kann die profilierte Schiene des Zubehöradapters bereits besonders günstig als Zusatzvisier zum Anvisieren eines Objektes verwendet werden.

Um ein rasche Zielfindung zu ermöglichen, ist es günstig, die Nut in einer ausreichenden Länge zur Verfügung zu stellen, um den Blick eines Benutzers entlang der Nut entsprechend führen und die Zielfindung erleichtern zu können. Eine hierdurch bestimmte Blickachse kann dann bereits eine ausreichend hohe Präzision der Blickführung ermöglichen. Besonders günstig weist die Nut daher eine Länge von mindestens 20 mm, bevorzugt mindestens 25 mm und ganz besonders bevorzugt mindestens 30 mm auf.

Weiterhin vorteilhaft im Sinne der Erfindung ist die profilierte Schiene ausgebildet mit einem Profil zur Aufnahme des Zusatzgerätes. Das Profil kann besonders günstig ein Schwalbenschwanzprofil sein. Es können aber auch Schienen mit anderen Querschnittsformen oder andere Profile vorgesehen sein, beispielsweise sogenannte Picatinny-Schienen, Weaver- oder 11mm-Prismenschienen, wie sie für die Montage von Reflexvisieren verwendet werden können. Vorzugsweise richtet sich die Ausbildung des Profils der profilierten Schiene nach der Art des Zusatzgerätes, das mit dem optischen Gerät verbunden werden soll.

In einer Weiterbildung der Erfindung ist die profilierte Schiene austauschbar an dem Stab befestigt, so dass ein Benutzer auf einfache Weise durch Austauschen der profilierten Schiene ein alternatives Profil für die Aufnahme des Zusatzgerätes an dem optischen Gerät anbringen kann.

Die Erfindung betrifft weiterhin ein kreisringförmiges Befestigungselement, um den Stab mit dem optischen Gerät fest und lösbar zu verbinden. Dabei kann das kreisringförmige Befestigungselement besonders günstig mit einem kreisförmigen Bereich oder Abschnitt des optischen Gerätes verbunden werden. Häufig umfassen abbildende optische Geräte ein Objektiv, welches optische Bauteile wie Linsen oder Blenden enthält und welches typischerweise kreisförmig ausgebildet ist. Im Sinne der Erfindung kann das kreisringförmige Befestigungselement vorteilhaft daher mit einem Abschnitt der Mantelfläche des Objektivs verbunden werden.

Besonders günstig ist das Befestigungselement dabei passgenau gegengleich zu dem entsprechenden zur Befestigung vorgesehenen Abschnitt der äußeren Mantelfläche des Objektivs ausgebildet.

Dabei kann der entsprechende Bereich der Mantelfläche mit einer umlaufenden Ausnehmung oder Vertiefung ausgebildet sein, der eine Aufnahme und/oder eine seitliche Fixierung des Befestigungselements auf der Mantelfläche ermöglicht. Das Befestigungselement kann im Zuge der Montage auf den entsprechenden Abschnitt aufgeschoben werden.

Besonders bevorzugt ist das Befestigungselement dabei axial um die optische Achse des Objektivs drehbar gelagert. Dies hat den Vorteil, dass das Befestigungselement in einfacher Weise gedreht werden kann. Auf diese Weise kann die mittels des Stabes befestigte profilierte Schiene ebenfalls axial um die optische Achse gedreht werden und in unterschiedliche Positionen gebracht werden.

Dies kann beispielsweise eine Position oder auch Arbeitsposition sein, bei der die profilierte Schiene als Zusatzvisier verwendet werden kann. Durch Drehen des Befestigungselements kann die profilierte Schiene aber auch in eine andere, zweite Position gedreht werden, in der sie - etwa beim Transportieren des optischen Gerätes - besser geschützt werden kann. Diese Position kann daher auch als Transportposition bezeichnet werden.

Besonders bevorzugt ist das Befestigungselement daher in verschiedenen, beispielsweise vier unterschiedlichen Positionen rastbar oder kann verrastet werden, um für den Benutzer das Einstellen bestimmter, vorher definierter Positionen zu erleichtern. Eine Rastung kann beispielsweise durch entsprechende Ausnehmungen auf der Mantelfläche des Objektivs im Bereich der Kontaktfläche zu dem Befestigungselement und ein mit einer Feder beaufschlagtes Kugeldruckstück auf der Innenseite des kreisringförmigen Befestigungselements erreicht werden. Die Rastung kann in verschiedenen Positionen, beispielsweise nach jeweils einer axialen Drehung um 45° oder 90°, erfolgen.

Zusätzlich kann das Befestigungselement mit einer Vorrichtung zum Fixieren in einer bestimmten Position ausgestattet sein, so dass der Benutzer besonders einfach durch eine manuelle Feststellung des Befestigungselements die profilierte Schiene in einer bestimmten Position fixieren kann. Dies kann beispielsweise der Fall sein, wenn das optische Gerät in einer um die optische Achse gedrehten Position verwendet wird und die profilierte Schiene weiterhin eine horizontale Ausrichtung haben soll.

Weiterhin günstig kann das Befestigungselement auf seiner äußeren Mantelfläche mit einer Ausnehmung oder Vertiefung ausgestattet sein, so dass ein manuelles Drehen für den Benutzer durch ein verbessertes Handling vereinfacht wird.

Die Erfindung betrifft weiterhin einen Stab zur Verbindung der profilierten Schiene mit dem Befestigungselement. Das eine Ende des Stabes ist dabei mit dem Befestigungselement, das gegenüberliegende Ende mit der profilierten Schiene verbunden. Dies hat den Vorteil, dass die profilierte Schiene automatisch der optischen Achse des optischen Gerätes folgt.

Um bereits als Zusatzvisier verwendet werden zu können, ist es hilfreich, dass eine durch die Nut gebildete Visierlinie in einer Arbeitsposition keine Überschneidungspunkte mit dem optischen Gerät oder Teilen davon aufweist, um den Blick eines Benutzers entlang der Nut nicht zu beeinträchtigen. Der Stab dient daher auch dazu, in der Arbeitsposition einen ausreichenden Abstand zwischen der Nut der profilierten Schiene und dem optischen Gerät herzustellen.

Dabei kann es günstig sein, den Abstand der profilierten Schiene zur optischen Achse des optischen Gerätes zwischen der Arbeitsposition und der Transportposition zu verändern, um beispielsweise in der Arbeitsposition einen größeren Abstand zu erreichen, in der Transportposition aber die profilierte Schiene möglichst nahe an das Objektiv in eine geschützte Position heranzubringen.

Häufig können derartige abbildende optische Geräte mittels einer Stativanbindung mit einem Stativ verbunden werden. Die Transportposition der profilierten Schiene kann dann besonders günstig eine Position sein, bei der die profilierte Schiene in eine Position gedreht wird, bei der die profilierte Schiene in Verlängerung der Stativanbindung gedreht wird und in dieser Position fixiert wird. Hierdurch kann eine besonders kompakte Unterbringung der profilierten Schiene während eines Transportes erreicht werden, welche zudem auch hohen Schutz vor äußeren Einflüssen bieten kann.

Das Befestigungselement, der Stab und/oder die profilierte Schiene können aus Materialien, umfassend Kunststoff oder Edelstahl oder aus Leichtgewichtsmaterialien, beispielsweise Aluminium oder Titan, gefertigt werden. Besonders günstig ist ein korrosionsbeständiges Material ausgewählt, um Schutz vor Witterungseinflüssen zu bieten.

Der erfindungsgemäße Zubehöradapter kann besonders günstig dazu verwendet werden, die Zielfindung bei Verwendung eines abbildenden optischen Gerätes, insbesondere eines Spektivs, eines Teleskops oder eines Teleobjektivs, zu vereinfachen. Dies gelingt besonders einfach durch die profilierte Schiene, die als Zusatzvisier verwendet werden kann.

Weiterhin kann der Zubehöradapter aber auch dazu verwendet werden, ein Zusatzgerät, insbesondere ein präzises Gerät zur Zielfindung, mit dem abbildenden optischen Gerät fest und lösbar zu verbinden. Auf diese Weise ermöglicht der Zubehöradapter das Anbringen von zusätzlichen Visierhilfen, beispielsweise eines Reflexvisiers oder eines Laserpointers.

Die Erfindung betrifft demnach weiterhin ein optisches Gerät wie ein Spektiv, ein Teleskop oder ein Teleobjektiv, welches einen erfindungsgemäßen Zubehöradapter umfasst.

Weitere Einzelheiten der Erfindung ergeben sich aus der Beschreibung der dargestellten Ausführungsbeispiele und den angefügten Ansprüchen.

### Die Zeichnungen zeigen:

- Fig. 1: eine Draufsicht auf einen Zubehöradapter,
- Fig. 2: eine Seitenansicht eines Zubehöradapters,
- Fig. 3: eine Schnittansicht eines Zubehöradapters,
- Fig. 4: ein Spektiv mit einem Zubehöradapter, gedreht in eine Arbeitsposition,
- Fig. 5: ein Spektiv mit einem Zubehöradapter, gedreht in eine Transportposition sowie
- Fig. 6: einen Schnitt durch ein Spektiv mit einem Zubehöradapter.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen.

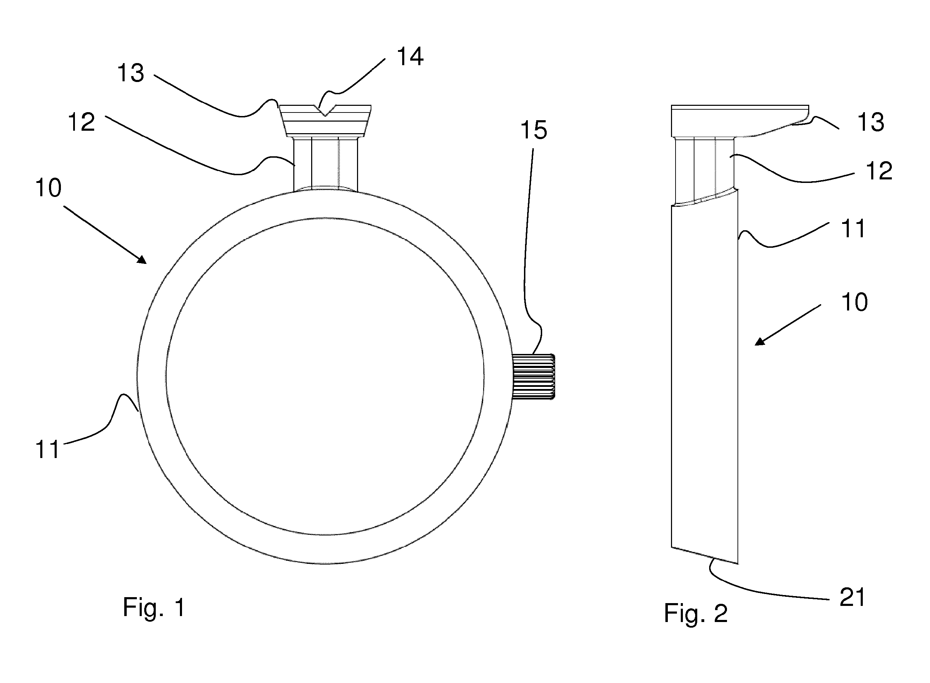

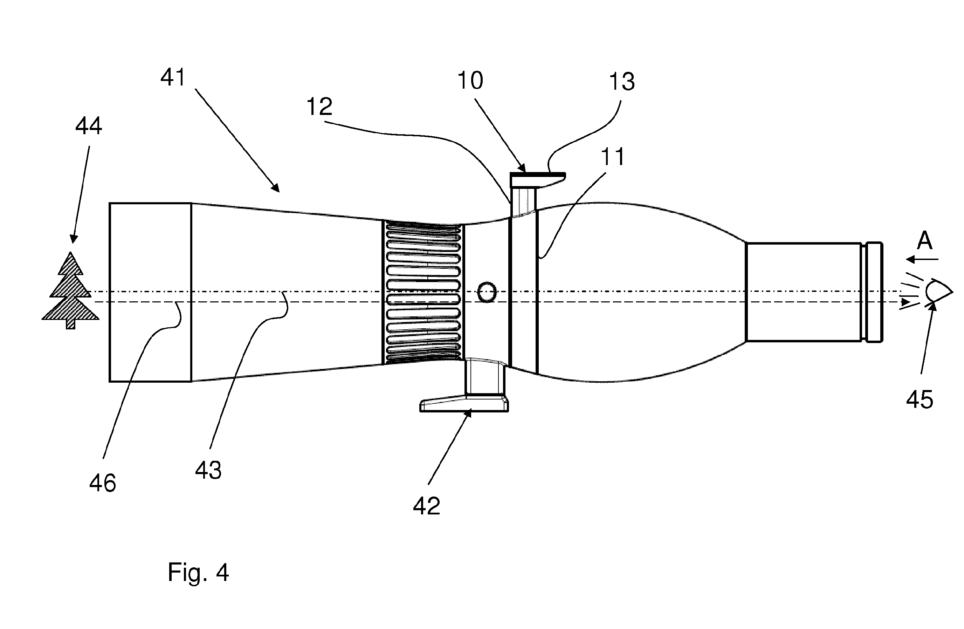

In Fig. 1 zeigt 10 einen erfindungsgemäßen Zubehöradapter. Dieser umfasst ein Befestigungselement 11, welches kreisringförmig ausgebildet ist. Das kreisringförmige Befestigungselement 11 weist dabei eine Innendurchmesser auf, der ein Aufschieben auf einen äußeren Abschnitt der Mantelfläche eines kreisförmigen Bereiches des optischen Gerätes mit wenig Spiel ermöglicht. Im montierten Zustand ist der Zubehöradapter eingebaut und fest mit dem optischen Gerät verbunden. Der Mittelpunkt des Befestigungselements 11 liegt dabei im montierten Zustand auf der optischen Achse des Objektives (43 in Figur 4).

Die profilierte Schiene 13 ist mit einem Schwalbenschwanzprofil ausgebildet, um eine einfache Montage eines Zusatzgerätes, insbesondere eine präzise oder hochpräzise Visierhilfe, zu ermöglichen. Die profilierte Schiene 13 kann auch mit anderen Profilformen ausgebildet sein, umfassend Profile, wie sie von sogenannte Picatinny-Schienen, von Weaver- oder 11mm-Prismenschienen, bekannt sind. Derartige Profile werden beispielsweise bei Schusswaffen verwendet, um etwa ein Reflexvisier mit der Schusswaffe verbinden zu können. Ebenso kann auf die profilierte Schiene 13 mit Schwalbenschwanzprofil ein Adapter (nicht dargestellt) mit einem von einem Schwalbenschwanzprofil abweichenden Profil, beispielsweise ein Adapter mit einem Picatinny-Profil, aufgesetzt werden, um Zusatzgeräte, welche nicht über eine Schwalbenschwanz-Aufnahme verfügen, mit der profilierten Schiene 13 mit Schwalbenschwanzprofil verbinden zu können. Somit können auch Zusatzgeräte oder Zubehörteile, beispielsweise mit einer Picatinny-Aufnahme, einfach und sicher mit der profilierten Schiene 13 verbunden werden. Auf diese Weise kann eine sehr große Flexibilität bei der Aufnahme des Zusatzgerätes erreicht werden.

Weiterhin ist die profilierte Schiene 13 mit einer zentrischen, in Längsrichtung verlaufenden Nut 14 ausgestattet. Diese Nut 14 verläuft parallel zur optischen Achse. Die Nut 14 ist dabei auf der dem Befestigungselement 11 abgewandten Seite der profilierten Schiene 13 angeordnet und als V-Nut ausgebildet.

Durch den untersten Punkt der Nut kann eine Visierlinie bei dem Blick eines Benutzers entlang dieser Nut bestimmt werden. Die Verlängerung dieser Visierlinie in Richtung der Umgebung ermöglicht dann das Anvisieren eines Punktes im Gelände. Auf diese Weise kann die Nut 14 als Kimme zur vereinfachten Zielfindung verwendet werden und stellt demzufolge ein Zusatzvisier dar.

Neben einer V-förmigen Nut sind auch andere Formen der Nut möglich, beispielsweise U-förmige Nuten. Dabei verläuft die Nut 14 im montierten Zustand parallel zur optischen Achse. Um eine Verwendung als Kimme zur Zielfindung zu ermöglichen, weist die profilierte Schiene im Bereich der Nut eine bestimmte Länge auf. Die kann durch eine Verlängerung der profilierten Schiene über die Länge des Befestigungselements hinaus erreicht werden. Besonders günstig ist die Länge der profilierten Schiene mindestens 20 mm, bevorzugt mindestens 25 mm und ganz besonders bevorzugt mindestens 30 mm.

Weiterhin ist ein Stab 12 vorgesehen, der mit seinem ersten Ende mit dem Befestigungselement 11 verbunden ist und mit seinem gegenüberliegenden Ende mit der profilierten Schiene 13. Durch die Länge des Stabes 12 kann der Abstand der Nut 14 von dem Mittelpunkt des kreisringförmigen Befestigungselements 11, welcher im montierten Zustand auf die optische Achse 43 des Objektivs fällt, festgelegt werden. Der Stab 12 kann auch teleskopartig verlängerbar ausgebildet sein, um verschiedene Abstände von der optischen Achse 43 einstellen zu können. Zur Feststellung einer bestimmten Position kann besonders günstig weiterhin eine Arretierschraube vorgesehen sein.

Fig. 2 zeigt eine Seitenansicht eines Zubehöradapters 10. Die Außenkontur 21 des kreisringförmigen Befestigungselements ist dabei konusförmig ausgebildet, um mit einem ebenfalls konusförmigen Abschnitt des Objektives passgenau gegengleich verbunden werden zu können. Ebenso sind aber auch andere Außenkonturen möglich. Diese können entsprechend der Außengeometrie des Objektives gewählt werden.

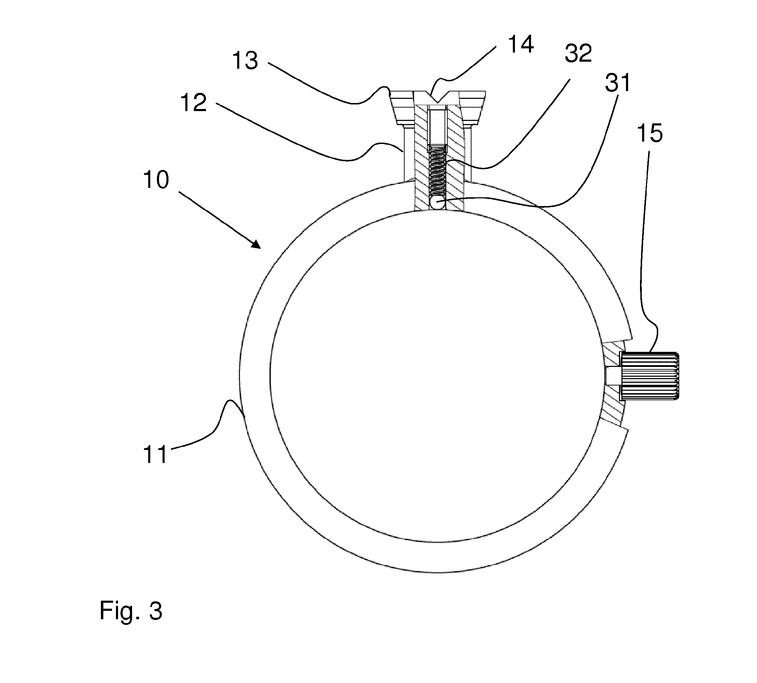

In Fig. 3 ist eine Schnittansicht eines Zubehöradapters 10 dargestellt. Auf der innenliegenden Mantelfläche des kreisringförmigen Befestigungselements 11 ist dabei eine Öffnung 33 vorgesehen, welche zur Aufnahme eines Kugeldruckstücks 31 ausgebildet ist. Das Kugeldruckstück 31 ist mit einer durch ein Federelement 32 erzeugten Kraft beaufschlagt. In einem entspannten Zustand ragt das Kugeldruckstück 31 in den Innenbereich des kreisringförmigen Befestigungselements 11 und ragt somit aus der innenliegenden Mantelfläche 34 des Befestigungselements 11 hervor.

Im montierten Zustand kann das Befestigungselement 11 in axialer Richtung gedreht werden. Das Kugeldruckstück 31 kann in entsprechende Vertiefungen oder Ausnehmungen auf der Außenseite des Abschnitts des Objektives, mit dem der Zubehöradapter verbunden ist, einrasten. Auf diese Weise kann ein montierter Zubehöradapter in unterschiedlichen Positionen verrastet werden.

Besonders günstig ist daher die Außenkontur des Objektives in dem Kontaktbereich mit dem Zubehöradapter 11 mit Vertiefungen oder Ausnehmungen in bestimmten Winkelabständen ausgebildet, in die das Kugeldruckstück 31 bei einem axialen Drehen des Befestigungselements einrasten kann. Die Winkelabstände dieser Vertiefungen können je nach Anwendung festgelegt werden, beispielsweise mit einem Winkelabstand von jeweils 45° oder 90° oder auch in hiervon abweichenden Positionen. Das Federelement 32 kann vorteilhaft in dem Stab 12 untergebracht sein.

Weiterhin ist das Befestigungselement 11 mit einem Feststellrädchen 35 ausgestattet, um den Zubehöradapter 10 in unterschiedlichen axialen Positionen auf dem Objektiv auch manuell fixieren zu können, beispielsweise in einer Transport- oder einer bevorzugten Arbeitsposition.

In Fig. 4 ist ein abbildendes optisches Gerät mit einem Zubehöradapter 10 dargestellt. Das gezeigte Spektiv 41 umfasst eine Stativanbindung 42 sowie den Zubehöradapter 10. Ein Benutzer 45 kann durch das Spektiv 41 entlang der optischen Achse 43 in Blickrichtung A auf ein Objekt 44 blicken. Dabei zeigt 46 die Lichtrichtung, welche vom Objekt 44 bzw. der Umgebung in Richtung des Auges des Benutzers 45 verläuft.

Sowohl die Stativanbindung 42 als auch der Zubehöradapter 10 sind mit jeweils einem kreisförmigen Abschnitt des optischen Gerätes verbunden. Die äußere Mantelfläche des optischen Gerätes im Bereich der Verbindungsfläche zu dem Zubehöradapter 10 ist mit einer umlaufenden Ausnehmung versehen, auf den das Befestigungselement 11 während der Montage aufgeschoben werden kann. Anschließend kann die Stativanbindung 42 ebenfalls auf den Abschnitt des optischen Gerätes aufgeschoben werden. Hierdurch ist eine beidseitige seitliche Fixierung des Zubehöradapters 10 gegeben, wobei dieser axial drehbar ist.

Die Außenkontur des Befestigungselements ist der Außenkontur des Abschnitts zur Befestigung angeglichen. Hierdurch kann das Befestigungselement ergonomisch und geometrisch homogen mit der angrenzenden Mantelfläche des kreisförmigen Abschnitts des optischen Gerätes zusammengefügt werden.

Das Befestigungselement 11 kann axial gedreht werden, so dass die profilierte Schiene 13 ebenfalls in verschiedene Positionen gedreht werden kann. In Fig. 4 ist die profilierte Schiene in einer bevorzugten Arbeitsposition gezeigt, bei der ein Benutzer entlang der Nut 14 blicken und in Verlängerung der hierdurch bestimmten Visierlinie ein Ziel anvisieren kann. Die Zielfindung wird dadurch erleichtert, dass die Kimme automatisch der optischen Achse 43 des Spektives 41 folgt. Auf diese Weise kann sehr einfach und rasch durch den Zubehöradapter 10 bereits eine vereinfachte Zielfindung, insbesondere auch bei einem stark vergrößernd abbildenden optischen Gerät wie dem Spektiv 41, erreicht werden.

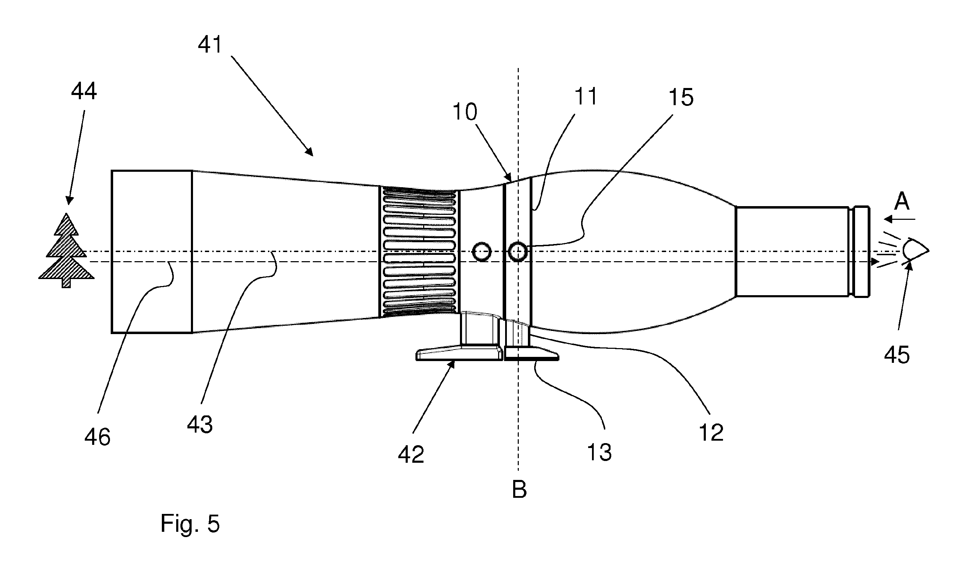

In Fig. 5 ist ein Spektiv 41 abgebildet mit einem Zubehöradapter 10, bei dem das Befestigungselement 11 in eine Position gedreht ist, bei der die profilierte Schiene 13 in einer Position in Verlängerung der Stativanbindung 42 liegt. Diese Position der profilierten Schiene 13 kann auch als Transportposition bezeichnet werden. In dieser Position ist die profilierte Schiene 13 vor äußeren Einflüssen bei einem Transport des optischen Gerätes geschützt. Zudem kann der Bauraum, etwa in einer Transporteinrichtung, reduziert werden.

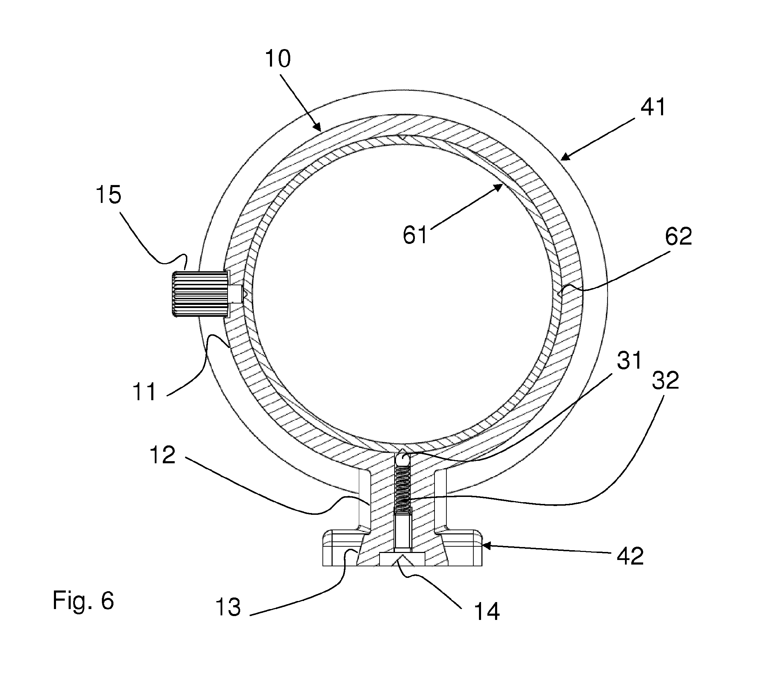

Fig. 6 zeigt einen Schnitt durch ein Spektiv 41 mit einem montierten Zubehöradapter 10. Gezeigt ist der Blick entlang einer Schnittachse B durch das in Fig. 5 abgebildete Spektiv 41 mit Zubehöradapter 10 in Blickrichtung A. Im Schnitt dargestellt ist das Gehäuse 61 des optischen Gerätes im Bereich des Abschnitts, der mit dem Befestigungselement 11 verbunden ist. Auf der umlaufenden äußeren Mantelfläche ist das Gehäuse 61 in diesem Bereich mit Vertiefungen 62 zum Rasten des Kugeldruckstückes 31 ausgebildet. Dargestellt sind vier Vertiefungen 62, die symmetrisch über die Umfangskontur angeordnet sind und damit ein Rasten des Befestigungselements 11 nach einer Drehung um jeweils 90° ermöglichen. Besonders günstig sind die Vertiefungen derart angeordnet, dass die Zubehörschiene in bevorzugten Positionen, beispielsweise der bevorzugten Arbeitsposition oder einer Transportposition, gerastet werden kann.

Es ist dem Fachmann ersichtlich, dass die Erfindung nicht auf die vorstehend anhand der Figuren beschriebenen lediglich beispielhaften Ausführungsformen beschränkt ist, sondern in vielfältiger Weise im Rahmen des Gegenstandes der Patentansprüche variiert werden kann. Insbesondere können auch die Merkmale einzelner Ausführungsbeispiele miteinander kombiniert werden.

### Liste der Bezugszeichen:

- 10: Zubehöradapter
- 11: kreisringförmiges Befestigungselement
- 12: Stab
- 13: profilierte Schiene
- 14: Nut
- 15: Fixierung
- 21: Außenkontur des Befestigungselements
- 31: Kugeldruckstück
- 32: Federelement
- 33: Öffnung
- 34: innenliegende Mantelfläche
- 35: Feststellrädchen
- 41: Spektiv
- 42: Stativanbindung
- 43: optische Achse
- 44: Objekt
- 45: Benutzer
- 46: Lichtrichtung
- 61: Gehäuse
- 62: Vertiefungen

## Patentansprüche

1. Zubehöradapter für eine vereinfachte Zielfindung zur Verwendung an oder mit einem abbildenden optischen Gerät, umfassend
- eine profilierte Schiene,
- einen Stab sowie
- ein kreisringförmiges Befestigungselement, um ein erstes Ende des Stabes mit dem optischen Gerät zu verbinden, wobei das dem ersten Ende gegenüberliegende Ende des Stabes mit der profilierten Schiene verbunden ist.

2. Zubehöradapter nach Anspruch 1, **dadurch gekennzeichnet, dass** die profilierte Schiene mit ihrer Längsachse parallel zur optischen Achse des optischen Gerätes ausgerichtet ist.

3. Zubehöradapter nach einem der vorstehenden Ansprüche, **dadurch gekennzeichnet, dass** die profilierte Schiene auf der dem optischen Gerät abgewandten Seite eine zentrisch entlang der Längsachse verlaufende Nut aufweist, besonders bevorzugt in V- oder U-Form.

4. Zubehöradapter nach einem der vorstehenden Ansprüche, **dadurch gekennzeichnet, dass** die durch die Nut gebildete Visierlinie in beidseitiger Verlängerung keine Berührungspunkte mit dem optischen Gerät oder Teilen hiervon aufweist.

5. Zubehöradapter nach einem der vorstehenden Ansprüche, **dadurch gekennzeichnet, dass** die profilierte Schiene ein Profil aufweist zur Aufnahme eine Zusatzgerätes, insbesondere ein Schwalbenschwanzprofil, ein Picatinny-Profil, ein Weaver- oder ein 11mm-Profil.

6. Zubehöradapter nach vorstehendem Anspruch, **dadurch gekennzeichnet, dass** ein Reflexvisier oder ein Laserpointer mit dem Zubehöradapter verbindbar ist.

7. Zubehöradapter nach einem der vorstehenden Ansprüche, **dadurch gekennzeichnet, dass** das kreisringförmige Befestigungselement passgenau gegengleich zu einem Abschnitt der äußeren Mantelfläche des optischen Geräts ausgebildet ist.

8. Zubehöradapter nach einem der vorstehenden Ansprüche, **dadurch gekennzeichnet, dass** das kreisringförmige Befestigungselement im montierten Zustand an dem optischen Gerät axial um die optische Achse des optischen Gerätes drehbar gelagert ist.

9. Zubehöradapter nach vorstehendem Anspruch, **dadurch gekennzeichnet, dass** das kreisringförmige Befestigungselement in verschiedenen vorher festgelegten Positionen rastbar ist oder verrastet werden kann.

10. Zubehöradapter nach vorstehendem Anspruch, **dadurch gekennzeichnet, dass** das kreisringförmige Befestigungselement in verschiedenen axialen Positionen mittels einer manuellen Feststellung fixiert werden kann.

11. Zubehöradapter nach vorstehendem Anspruch, **dadurch gekennzeichnet, dass** das kreisringförmige Befestigungselement an seiner äußeren Mantelfläche zumindest eine Ausnehmung oder Vertiefung für ein vereinfachtes Handling des Drehens umfasst.

12. Zubehöradapter nach vorstehendem Anspruch, **dadurch gekennzeichnet, dass** das kreisringförmige Befestigungselement in eine Transportposition gedreht und dort gerastet und/oder fixiert werden kann.

13. Zubehöradapter nach einem der vorstehenden Ansprüche, **dadurch gekennzeichnet, dass** die profilierte Schiene austauschbar ist.

14. Verwendung eines Zubehöradapters nach einem der vorstehenden Ansprüche zum Verbinden eines Zusatzgerätes zur präzisen Zielfindung, insbesondere eines Reflexvisiers oder eines Laserpointers, mit einem optischen Gerät, insbesondere einem Spektiv, Perspektiv, Teleskop oder Teleobjektiv.

15. Optisches Gerät mit einem Zubehöradapter gemäß einem der vorstehenden Ansprüche, umfassend ein Spektiv, ein Perspektiv, ein Teleskop oder ein Teleobjektiv.
